# EUROPÄISCHE PATENTSCHRIFT

(11) **EP 2 985 578 B1**
(45) Veröffentlichungstag und Bekanntmachung des Hinweises auf die Patenterteilung: **10.01.2018**
(21) Anmeldenummer: 15179287.6
(22) Anmeldetag: 31.07.2015
(51) Int. Cl.: G01G 23/00, G01G 21/24, G01L 1/26

(54) **WÄGEZELLE ZUR GEWICHTSKRAFTMESSUNG**
WEIGHING CELL FOR WEIGHT FORCE MEASUREMENT
CELLULE DE PESAGE DESTINEE A MESURER LA FORCE DU POIDS

(30) Priorität: 15.08.2014 DE 102014111682
(43) Veröffentlichungstag der Anmeldung: 17.02.2016
(73) Patentinhaber: Bizerba SE & Co. KG, 72336 Balingen (DE)
(72) Erfinder: BODMER, Benjamin, 72336 Balingen (DE); METZGER, Frank, 72461 Albstadt (DE); MÜLLER, Klaus, 72379 Hechingen (DE)
(74) Vertreter: Louis Pöhlau Lohrentz

(56) Entgegenhaltungen:
- FR-A1- 2 490 342
- JP-U- S5 619 730

## Beschreibung

Die Erfindung betrifft eine Wägezelle zur Gewichtskraftmessung gemäß den Merkmalen des Oberbegriffs des Anspruchs 1.

Eine solche Wägezelle ist aus der JPS5619730U bekannt. Dort ist eine Wägezelle mit einem Biegestab gezeigt, der eine Überlastsicherung aufweist. Die Überlastsicherung weist einen Steg auf, der in eine Ausnehmung des Biegestabs eingreift.

Die FR 2 490 342 A1 zeigt eine Kraftmesszelle zur Messung von hohen Zuggkräften. Die Kraftmesszelle umfasst zwei keilförmige Deformationszonen, die hintereinander geschaltet und jeweils einem Messbereich zugeordnet sind. Bei Krafteinleitung verformen sich diese Deformationszonen unterschiedlich um insgesamt einen großen Meßbereich abzudecken. Diese Kraftmesszelle kann beispielsweise auch in einer Waage eingesetzt werden.

In der Praxis ist es notwendig, bei Wägezellen eine Überlastsicherung vorzusehen, um bei einer zu hohen Last einer Zerstörung der Wägezelle zu vermeiden.

Aus der DE 10 2004 027 619 B4 ist eine Überlastsicherung für einen Lastaufnehmer einer Wägezelle bekannt. Die gezeigte Wägezelle weist zwei Parallelogrammlenker auf, die in einem Biegestab angeordnet sind und durch unterhalb der Parallelogrammlenker angeordnete Ausnehmungen gebildet werden. Zwischen den Ausnehmungen ist ein Begrenzungselement angeordnet, welches einen schmalen stirnseitigen Zapfen aufweist, der in eine Ausnehmung des beweglichen Teiles des Biegestabs eingreift. Der Zapfen weist eine konkave Kontur auf, die an runde Passstifte angepasst ist. Die Passstifte werden in eine an dem beweglichen Teil des Lastaufnehmers angeordnete Ausnahme eingesetzt und dort befestigt. Der Durchmesser der Passstifte bestimmt den freien Weg des beweglichen Teils des Lastaufnehmers. Dieser Biegestab ist in der Herstellung relativ aufwendig, da es erforderlich ist, die Abmessungen der Passstifte sowie die Außenkontur des Zapfens sehr exakt aufeinander abzustimmen, und bei der Montage nur sehr geringe Toleranzen zulässig sind.

Die EP 0 251 175 A2 zeigt einen Lastaufnehmer einer Gewichtszelle, der quer zu seiner Längserstreckung vier Durchgangslöcher aufweist. Diese vier Durchgangslöcher sind durch Schlitze miteinander verbunden. Ein sich in Krafteinleitungsrichtung erstreckender Schlitz weist eine Kontur auf, die sich abschnittsweise quer zu der Krafteinleitungsrichtung erstreckt. Aufgrund der sich quer zu der Krafteinleitungsrichtung erstreckenden Kontur stellt dieser Schlitz eine Überlastsicherung dar. Bei der Herstellung dieses Biegestabs ist es notwendig, relativ lange dünne Schlitze auszubilden, die nur eine sehr geringe Toleranz aufweisen dürfen. Daher ist dieser Biegestab in der Herstellung relativ aufwendig zu fertigen.

Die US 6,755,087 B2 zeigt einen Lastaufnehmer einer Wägezelle, die ebenfalls vier Ausnehmungen aufweist, die quer zu der Längserstreckung des Lastaufnehmers ausgerichtet sind. Auch diese vier Ausnehmungen sind wiederum über Schlitze miteinander verbunden. Diese Schlitze erstrecken sich ebenfalls über eine sehr lange Strecke, sodass auch dieser Biegestab relativ aufwendig herzustellen ist.

Aufgabe der vorliegenden Erfindung ist es, eine Wägezelle zur Gewichtsmessung zu schaffen, die einfach und kostengünstig herstellbar ist und dabei eine betriebssichere Überlastsicherung aufweist.

Diese Aufgabe wird erfindungsgemäß mit einem Gegenstand nach den Merkmalen des Anspruchs 1 gelöst.

Erfindungsgemäß ist vorgesehen, dass der Biegestab eine Überlastsicherung aufweist, die einen parallel zu der Mittelebene verlaufenden Steg aufweist, der die erste Ausnehmung von der zweiten Ausnehmung trennt und dessen parallel zu der Mittelebene des Biegestabs verlaufende Außenseiten geradlinig ausgeführt sind, wobei der Steg entweder
mit seinem einem Ende fest mit der Festlandseite verbunden ist und mit seinem anderen stirnseitigen Ende in einen an der Krafteinleitungsseite angeordneten materialfreien Bereich frei eingreift, so dass in Neutralstellung zwischen den parallel zu der Mittelebene verlaufenden Außenseiten des Stegs und der Krafteinleitungsseite jeweils ein oberer und ein unterer Luftspalt angeordnet ist, oder mit seinem einem Ende fest mit der Krafteinleitungsseite verbunden ist und mit seinem anderen stirnseitigen Ende in einen an der Festiandseite angeordneten materialfreien Bereich frei eingreift, so dass in Neutralstellung zwischen den parallel zu der Mittelebene verlaufenden Außenseiten des Stegs und der Festlandseite jeweils ein oberer und ein unterer Luftspalt angeordnet ist,
und dass der obere und der untere Luftspalt in eine im Bereich des stirnseitigen Endes des Stegs angeordnete dritte Ausnehmung einmündet, die eine runde Kontur aufweist. Die runde Kontur der dritten Ausnehmung kann beispielsweise als elliptische oder als kreisrunde Kontur ausgebildet sein.

Insbesondere kann auch vorgesehen sein, dass sich die parallel zu der Mittelebene verlaufenden Außenseiten des Stegs über den Verformungsbereich hinaus, bzw. über die in Längsrichtung des Steges verlaufenden Abmessungen der ersten Ausnehmung und zweiten Ausnehmung hinaus erstrecken. Insbesondere kann der Verformungsbereich hinsichtlich seiner Ausdehnung in Längsrichtung des Steges durch die die in Längsrichtung des Steges verlaufenden Abmessungen der ersten Ausnehmung und/oder der zweiten Ausnehmung definiert sein.

Von Vorteil ist, dass bei der erfindungsgemäßen Lösung der obere und der untere Luftspalt sich nur über eine relativ kurze Strecke erstrecken. Weiter sind sowohl der obere Luftspalt als auch der untere Luftspalt geradlinig verlaufend ausgebildet. Der Fertigungsaufwand zur Herstellung dieser mit geringen Toleranzen zu fertigenden Schlitze bzw. Luftspalte fällt daher relativ gering aus. Die dritte Ausnehmung, die den oberen mit dem unteren Luftspalt verbindet, kann durch eine kostengünstige Fertigungsmethode, beispielsweise durch Fräsen oder Bohren oder einer sonstigen Bearbeitungsmethode angefertigt werden.

Weiter kann in einer erfindungsgemäßen Ausgestaltung vorgesehen sein, dass der Biegestab an seinem einen Ende eine feststehende Festlandseite und an seinem gegenüberliegenden Ende eine in Krafteinleitungsrichtung bewegliche Krafteinleitungsseite aufweist, wobei die Krafteinleitungsseite mit der Festlandseite über einen Verformungsbereich verbunden ist, der zwei parallel zueinander und in Krafteinleitungsrichtung voneinander beabstandet verlaufende Parallelogrammlenker aufweist, die parallel zu der quer zu der Krafteinleitungsrichtung verlaufenden Mittelebene des Biegestabs angeordnet sind, und wobei in dem Verformungsbereich eine materialfreie erste Ausnehmung und eine materialfreie zweite Ausnehmung in Krafteinleitungsrichtung übereinander liegend angeordnet sind und die erste Ausnehmung und die zweite Ausnehmung jeweils an einen Parallelogrammlenker unmittelbar anschließend ausgeführt sind,
wobei der Biegestab eine Überlastsicherung aufweist, die einen parallel zu der Mittelebene verlaufenden Steg umfasst, dessen parallel zu der Mittelebene verlaufende Außenseiten geradlinig ausgeführt sind, und dass der Steg entweder:
mit seinem einem Ende fest mit der Festlandseite verbunden ist und mit seinem anderen stirnseitigen Ende in einen zwischen der ersten Ausnehmung und zwischen der zweiten Ausnehmung angeordneten materialfreien Bereich frei eingreift, so dass in Neutralstellung zwischen den parallel zu der Mittelebene verlaufenden Außenseiten des Stegs und der Krafteinleitungsseite jeweils ein oberer Luftspalt und ein unterer Luftspalt angeordnet ist, oder:
   mit seinem einem Ende fest mit der Krafteinleitungsseite verbunden ist und mit seinem anderen stirnseitigen Ende in einen zwischen der ersten Ausnehmung und zwischen der zweiten Ausnehmung angeordneten materialfreien Bereich frei eingreift, so dass in Neutralstellung zwischen den parallel zu der Mittelebene verlaufenden Außenseiten des Stegs und der Festlandseite jeweils ein oberer Luftspalt und ein unterer Luftspalt angeordnet ist,
   und dass der obere Luftspalt und der untere Luftspalt in eine im Bereich des stirnseitigen Endes des Stegs angeordnete dritte Ausnehmung einmünden, die eine runde Kontur aufweist.

Es ist vorzugsweise vorgesehen, dass der obere Luftspalt und der untere Luftspalt als relativ dünne Schlitze ausgeführt sind. Der obere Luftspalt und der untere Luftspalt sind insbesondere zwischen dem Steg und der Krafteinleitungsseite oder der Festlandseite angeordnet. Die Abmessungen dieser Schlitze, insbesondere deren Breite und/oder deren Länge legen die frei bewegliche Strecke der Krafteinleitungsseite fest.

In Neutralstellung ist die Wägezelle bzw. der Biegestab unbelastet. Das bedeutet, dass der obere Parallelogrammlenker und der untere Parallelogrammlenker in Neutralstellung parallel zu den Außenseiten und parallel zu der Mittelebene des Biegestabs angeordnet sind. Wird der Biegestab mit einer Kraft belastet, so schert die Krafteinleitungsseite gegenüber der Festlandseite in Richtung der Kraftwirkung, also in Krafteinleitungsrichtung aus. Dadurch verformen sich im Verformungsbereich die Parallelogrammlenker. Diese Verformung kann über Sensoren erfasst werden.

Der in der Mittelebene des Biegestabs angeordnete Steg ist insbesondere so angeordnet bzw. ausgebildet, dass er trotz Belastung des Biegestabs weiterhin parallel zu der Mittelebene ausgerichtet bleibt. Dieses wird beispielsweise bewirkt, indem der Steg im Bereich der Mittelebene des Biegestabs angeordnet ist bzw. die Mittelebene innerhalb des Stegs angeordnet ist. Vorzugsweise umfasst der Steg somit eine neutrale Linie des Biegestabs und verformt sich bei einer Belastung des Biegestabs nicht. Da der Steg jedoch in eine Ausnehmung an der Krafteinleitungsseite eingreift und diese Krafteinleitungsseite sich gegenüber der Festlandseite bewegt, verändert sich bei einer Gewichtsmessung der Abstand zwischen dem Steg und der Krafteinleitungsseite und damit die Breite des oberen bzw. des unteren Luftspalts. Wenn die zu messende Gewichtskraft entsprechend hoch wird, so wird der obere Luftspalt überbrückt und die Krafteinleitungsseite kommt in direkte Anlage mit einer Außenkontur des Stegs. Durch den Steg wird nun eine weitere Bewegung der Krafteinleitungsseite wirksam verhindert, auch wenn die Gewichtskraft weiter ansteigt.

Die Festlandseite des Biegestabs ist ortsfest ausgeführt und kann fest mit einer Waage verbunden werden, insbesondere mit einem Gehäuse oder einem Rahmen einer Waage verschraubt werden. Die Krafteinleitungsseite des Biegestabs ist gegenüber der Festlandseite in Krafteinleitungsrichtung frei beweglich. Zwischen der Festlandseite und der Krafteinleitungsseite ist ein Verformungsbereich angeordnet, der Parallelogrammlenker aufweist. Ein oberer erster Parallelogrammlenker und ein unterer zweiter Parallelogrammlenker verbinden die Festlandseite mit der Krafteinleitungsseite. Die Länge der Parallelogrammlenker definiert einen Verformungsbereich, wobei in dem Verformungsbereich Sensoren zur Messung einer Vorformung angebracht werden können. Diese Sensoren können als DMS (Dehnungsmessstreifen) oder nach dem Prinzip einer schwingenden Saite ausgebildet sein.

Die Krafteinleitungsrichtung der Wägezelle verläuft im Wesentlichen senkrecht zu der Mittelebene des Biegestabs. Die Krafteinleitungsrichtung bildet sozusagen eine Normale zu der Mittelebene des Biegestabs.

Die Parallelogrammlenker sind zueinander beabstandet angeordnet und verlaufen jeweils in einer Ebene, die in Krafteinleitungsrichtung gesehen oberhalb bzw. unterhalb der Mittelebene der Wägezelle verläuft.

Der Biegestab kann aus einem quaderförmigen, insbesondere einstückigen Block ausgebildet sein. Der Biegestab kann insbesondere aus einer Metalllegierung, beispielsweise einer Aluminiumlegierung oder einer Stahllegierung ausgebildet sein.

Es ist in einer Ausgestaltung vorgesehen, dass in dem Verformungsbereich des Biegestabs zwischen den Parallelogrammlenkern und der Mittelebene des Biegestabs jeweils Ausnehmungen in Krafteinleitungsrichtung übereinanderliegend angeordnet sind. Die Ausnehmungen sind an einen Parallelogrammlenker unmittelbar anschließend ausgeführt. Die in Krafteinleitungsrichtung gesehene oben liegende erste Ausnehmung ist durch einen Steg von der in Krafteinleitungsrichtung gesehen unteren zweiten Ausnehmung getrennt.

In einer Ausführung ist vorzugsweise vorgesehen, dass der Steg symmetrisch bezüglich der Mittelebene des Biegestabs ausgebildet ist, insbesondere, dass der Steg eine Symmetrieebene aufweist, die zwischen der ersten und der zweiten Ausnehmung quer zu der Krafteinleitungsrichtung angeordnet ist. Dabei kann die Symmetrieebene des Stegs mit der Mittelebene des Biegestabs zusammenfallen.

Für eine vereinfachte Bearbeitung kann weiter vorgesehen sein, dass die erste Ausnehmung und die zweite Ausnehmung bezüglich der Mittelebene des Biegestabs symmetrisch ausgebildet sind.

In einer Ausführung kann vorgesehen sein, dass die Erstreckung oder die lichte Weite der ersten Ausnehmung und der zweiten Ausnehmung in Krafteinleitungsrichtung größer ist als die Erstreckung oder die Dicke des Stegs in Krafteinleitungsrichtung.

Eine einfache Fertigung der Wägezelle kann erreicht werden, indem der Steg einstückig mit dem Biegestab ausgebildet ist. In einer alternativen Ausgestaltung kann der Steg auch als separates Teil ausgeführt sein, welches entweder mit der Krafteinleitungsseite oder mit der Festlandseite verbunden ist, vorzugsweise verschraubt oder vernietet ist.

Eine einfache Fertigung des Biegestabs ergibt sich, indem in einer Ausgestaltung vorgesehen sein kann, dass die Erstreckung oder die lichte Weite der ersten Ausnehmung und der zweiten Ausnehmung in Krafteinleitungsrichtung größer ist als die Erstreckung oder die Dicke des Stegs in Krafteinleitungsrichtung.

Es ist insbesondere vorgesehen, dass die Außenkontur des Stegs eine gerade, insbesondere parallel zur Mittelebene des Biegestabs verlaufende Kontur aufweist, und dass der Durchmesser der runden Kontur der dritten Ausnehmung in Krafteinleitungsrichtung mindestens so groß ist, vorzugsweise genau so groß ist, wie der Abstand der ersten Ausnehmung von der zweiten Ausnehmung. Vorzugsweise ist der Durchmesser der runden Kontur der dritten Ausnehmung in Krafteinleitungsrichtung genau so groß bemessen wie der Abstand der ersten Ausnehmung von der zweiten Ausnehmung plus der Breite des ersten Luftspalts und des zweiten Luftspalts. Dadurch ist es möglich, dass der Verlauf des oberen Luftspalts und des unteren Luftspalts ebenfalls parallel zur Mittelebene des Biegestabs ausgeführt sein kann. So kann auf konstruktiv einfache Weise der obere Luftspalt bzw. der untere Luftspalt parallel zu der Außenkontur des Stegs und vorzugsweise parallel zu der Mittelebene des Biegestabs ausgeführt werden.

In einer Ausgestaltung kann beispielsweise vorgesehen sein, dass die Höhe des Stegs in Krafteinleitungsrichtung im Bereich zwischen 7 mm und 25 mm liegt, bevorzugt zwischen 10 mm und 16 mm liegt, besonders bevorzugt 13 mm beträgt. Dementsprechend kann der Durchmesser der dritten Ausnehmung in Krafteinleitungsrichtung im Bereich zwischen 8 mm und 26 mm liegen, bevorzugt zwischen 11 mm und 17 mm liegen, besonders bevorzugt 14 mm beträgt. Der Durchmesser der dritten Ausnehmung ist gegenüber der Höhe des Stegs um die Breite der Luftspalte vergrößert ausgeführt. Die Breite des oberen Luftspalts und/oder des unteren Luftspalts kann im Bereich zwischen 0,25 mm bis 1,5 mm liegen, bevorzugt zwischen 0,4 und 0,8 mm liegen, besonders bevorzugt 0,5 mm betragen. Die Länge des oberen Luftspalts und des unteren Luftspalts kann im Bereich von 5 mm bis 25 mm liegen, bevorzugt zwischen 7 mm und 25 mm liegen, besonders bevorzugt 10 mm betragen.

Weiter kann vorgesehen sein, dass der Mittelpunkt der dritten Ausnehmung in der Mittelebene des Biegestabs liegt.

Es ist in einer Ausgestaltung vorgesehen, dass die Ausdehnung des Verformungsbereichs durch die Länge der Parallelogrammlenker bestimmt wird. Insbesondere wird der Verformungsbereich durch die Erstreckung der ersten Ausnehmung bzw. der zweiten Ausnehmung in Längsrichtung des Biegestabs definiert. Insbesondere kann vorgesehen sein, dass sich die Erstreckung des Stegs in Längsrichtung des Biegestabs über den Verformungsbereich hinaus erstreckt. Die Erstreckung des Stegs in Längsrichtung des Biegestabs ist vorzugsweise größer, wie die Erstreckung der ersten Ausnehmung und/oder der zweiten Ausnehmung in Längsrichtung des Biegestabs.

Eine besonders kostengünstige Herstellung des Biegestabs wird erreicht, indem die erste und/oder die zweite Ausnehmung durch spanende Bearbeitung, insbesondere durch Fräsen oder Bohren, hergestellt wird bzw. werden.

Ebenso kann die dritte Ausnehmung durch spanende Bearbeitung, insbesondere durch Bohren oder Fräsen, hergestellt werden.

Ein besonders kostengünstiges und dabei exaktes und zuverlässiges Herstellungsverfahren ergibt sich, indem der obere Luftspalt und der untere Luftspalt durch Erodieren, insbesondere Drahterodieren oder Funkenerodieren, hergestellt werden.

Um die Wägezelle bzw. den Biegestab an unterschiedliche Gewichtsbereiche anzupassen, kann vorgesehen sein, dass der maximale Weg der beweglichen Krafteinleitungsseite relativ zu der Festlandseite durch die Breite des ersten und/oder des zweiten Luftspaltes eingestellt wird.

Ebenso kann vorgesehen sein, dass der maximale Weg der beweglichen Krafteinleitungsseite relativ zu der Festlandseite durch den Abstand der dritten Ausnehmung in Längsrichtung des Biegestabs zu der ersten und/oder der zweiten Ausnehmung einstellbar ist und/oder dass der maximale Weg der beweglichen Krafteinleitungsseite relativ zu der Festlandseite durch die Länge des ersten Schlitzes und/oder des zweiten Schlitzes einstellbar ist.

Eine Anwendung der erfindungsgemäßen Wägezelle kann beispielsweise in einer Waage erfolgen, die im Frischeverkauf für Lebensmittel eingesetzt wird. Durch das kostengünstige und exakte Herstellungsverfahren ist es auch möglich, die erfindungsgemäße Wägezelle bei industriellen Waagen, beispielsweise bei Kontrollwaagen oder Dosierwaagen einzusetzen.

Die Erfindung wird nun anhand von Ausführungsbeispielen näher erläutert. Es zeigen:
- Fig. 1:: eine schematische Darstellung der Wägezelle in perspektivischer Ansicht;
- Fig. 2:: eine schematische Darstellung der Wägezelle in Seitenansicht.

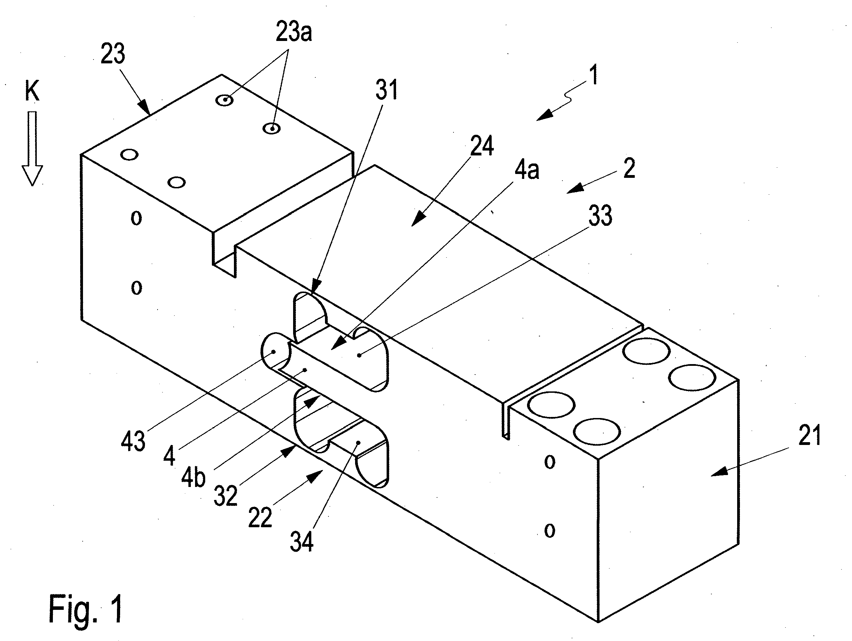

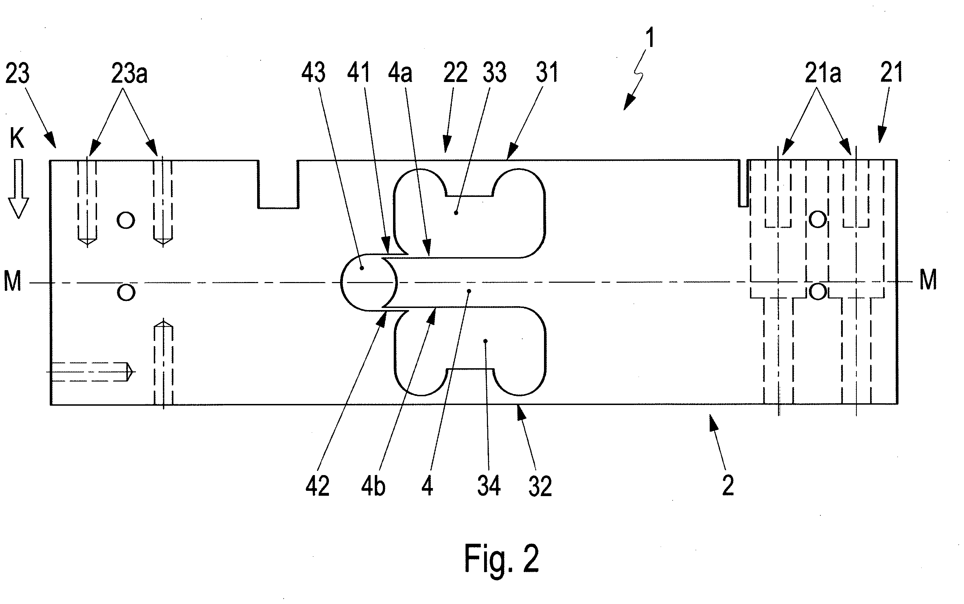

Die beiden Figuren 1 und 2 zeigen eine Wägezelle 1 mit einem quaderförmigen Biegestab 2. Der quaderförmige Biegestab 2 ist als monolithischer Biegestab ausgeführt und wird aus einem massiven Block, bspw. einem Aluminiumblock hergestellt. Der Biegestab 2 weist entlang seiner Längserstreckung drei Bereiche auf. Ein erster feststehender Bereich ist durch die Festlandseite 21 gebildet. In diesem Bereich sind, wie in der Fig. 2 dargestellt, Aufnahmeöffnungen 21a vorgesehen, mit denen der Biegestab 2 in einer Waage bzw. in einem Gestell einer Waage fest verschraubt werden kann.

An dem der Festlandseite 21 gegenüberliegenden Ende des Biegestabs 2 ist die Krafteinleitungsseite 23 angeordnet. Im Bereich der Krafteinleitungsseite 23 sind Aufnahmeöffnungen 23a vorgesehen, über die der Biegestab 2 mit einer Lastaufnahmeschale verbunden werden kann. Zwischen der Festlandseite 21 und der Krafteinleitungsseite 23 ist ein Verformungsbereich 22 angeordnet. Der Verformungsbereich 22 wird durch materialfreie erste und zweite Ausnehmungen gebildet, die quer zu der Längserstreckung des Biegestabs 2 verlaufen. Die Ausnehmungen schaffen Schwächungszonen, die eine kalkulierbare Verformung des Biegestabs 2 ermöglichen.

Eine erste Ausnehmung 33 ist im oberen Bereich des Biegestabs 2 angeordnet. Eine zweite Ausnehmung 34 ist im unteren Bereich des Biegestabs 2 angeordnet. In der Mitte des Biegestabs 2 verläuft eine Mittelebene, die in der Fig. 2 durch die gestrichelte Linie M-M skizziert ist. Senkrecht zu der Mittelebene M-M des Biegestabs 2 verläuft die Krafteinleitungsrichtung K, die durch einen senkrecht verlaufenden Pfeil in den Figuren 1 und 2 dargestellt ist.

Die Ausnehmungen 33 bzw. 34 werden aus dem als Ausgangsmaterial verwendeten Block durch Bohren bzw. Fräsen herausgearbeitet. Sie verlaufen quer zu der Längserstreckung des Biegestabs 2 und erstrecken sich über dessen gesamte Breite. Oberhalb bzw. unterhalb der Ausnehmungen 33 und 34 sind Parallelogrammlenker angeordnet. Die Parallelogrammlenker 31 und 32 werden durch die erste Ausnehmung 33 und die zweite Ausnehmung 34 gebildet. Der obere Parallelogrammlenker 31 und der untere Parallelogrammlenker 32 bilden ein Parallelogrammlenkergestänge, welches eine gezielte Scherbewegung der Krafteinleitungsseite 23 gegenüber der Festlandseite 21 ermöglicht.

Um den Weg der Scherbewegung zu begrenzen, sodass auch bei hoher Last keine bleibenden plastischen Verformungen oder Beschädigungen des Biegestabs 2 entstehen, ist eine Überlastsicherung vorgesehen. Die Überlastsicherung umfasst einen Steg 4, der im mittleren Bereich zwischen der oberen Ausnehmung 33 und der unteren Ausnehmung 34 angeordnet ist. Die obere Außenkontur 4a des Stegs 4 bildet eine Begrenzung bzw. Grenzfläche der oberen Ausnehmung 33. Die untere Außenkontur 4b des Stegs 4 bildet eine Begrenzung bzw. Grenzfläche der unteren Ausnehmung 34.

Der Steg 4 erstreckt sich von der Festlandseite 21 über den Verformungsbereich 22 hinaus bis in eine Ausnehmung an dem beweglichen Krafteinleitungsbereich 23. In dem Krafteinleitungsbereich 23 sind oberhalb bzw. unterhalb des Stegs 4 jeweils ein Luftspalt 41 bzw. 42 angeordnet. Der obere Luftspalt 41 erstreckt sich geradlinig von der oberen Ausnehmung 33 bis zu einer dritten Ausnehmung 43, die stirnseitig des Stegs 4 angeordnet ist. Die dritte Ausnehmung 43 erstreckt sich quer zu der Längserstreckung des Biegestabs 2 und verläuft über dessen gesamte Breite. Die dritte Ausnehmung 43 weist eine kreisrunde Kontur auf. Der Mittelpunkt der dritten Ausnehmung 43 liegt in der Mittelebene M-M, wie in Fig. 2 dargestellt ist.

In der Fig. 1 und in der Fig. 2 ist jeweils die unbelastete Neutralstellung des Biegestabs 2 dargestellt. Bei einer Belastung des Biegestabs mittels einer Gewichtskraft entlang des Vektors K schert die Krafteinleitungsseite 23 nach unten aus. Da der Steg 4 in der Mittelebene des Biegestabs 2 verläuft und mit der Festlandseite fest verbunden ist, macht der Steg 4 diese Scherbewegung nicht mit. Bei der Scherbewegung in Krafteinleitungsrichtung K wird die Distanz des oberen Luftspalts 41 verkleinert. Je weiter die Krafteinleitungsseite 23 ausschert, desto kleiner wird der obere Luftspalt 41. Ab einem gewissen Gewichtswert, der der maximal zulässigen Scherbewegung der Krafteinleitungsseite 23 entspricht, verschwindet der Luftspalt 41 und der Steg 4 kommt in direkte Anlage mit der Krafteinleitungsseite 23. Ab diesem Punkt stützt der Steg 4 die Krafteinleitungsseite 23 ab, sodass eine weitere Scherbewegung der Krafteinleitungsseite 23 nicht mehr möglich ist.

Durch die Scherbewegung der Krafteinleitungsseite 23 wird in dem Verformungsbereich 22 eine Verformung hervorgerufen. Diese Verformung wird über Sensoren detektiert. Die Sensoren werden auf einer Sensorapplikationsfläche 24 appliziert, die an der Oberseite des Biegestabs 2, wie in Fig. 1 dargestellt, verläuft. Auf diese Sensorapplikationsfläche 24 können beispielsweise DMS-Sensoren appliziert, insbesondere verklebt werden, die ein Messsignal abgeben, welches in funktionalem Zusammenhang mit der Auslenkung der Krafteinleitungsseite 23 steht.

Die Wägezelle 1 umfasst neben dem Biegestab 2 und den in den Figuren der Übersichtlichkeit halber nicht dargestellten Sensoren zur Kraftmessung zudem noch eine Auswerteelektronik, insbesondere einen AD-Wandler, um die von den Sensoren gelieferten Messsignale aufzubereiten und an eine übergeordnete Auswertevorrichtung weiterzugeben.

Bei der Herstellung des Biegestabs 2 ist vorgesehen, dass zuerst die ersten und zweiten Ausnehmungen 33 und 34 durch spanende Bearbeitung, beispielsweise Fräsen oder Bohren, hergestellt werden. Anschließend kann durch Bohren oder Fräsen die dritte Ausnehmung 43 aus dem Biegestab 2 herausgearbeitet werden. Der obere Luftspalt 41 wie auch der untere Luftspalt 42 kann dann anschließend durch Drahterodieren hergestellt werden. Dabei erfolgt durch den oberen Luftspalt 41 eine Verbindung von der ersten, oberen Ausnehmung 33 hin zu der dritten Ausnehmung 43. Auf gleiche Art und Weise erfolgt durch den unteren Luftspalt 42 eine Verbindung der zweiten, unteren Ausnehmung 34 hin zu der dritten Ausnehmung 43. Durch die Breite eines Luftspalts 41 oder 42 bzw. die Länge der Luftspalte 41, 42 kann der maximale Weg der Krafteinleitungsseite 23 gezielt festgelegt und/oder eingestellt werden. Die Erstreckung des Verformungsbereichs 22 in Längsrichtung des Biegestabs 2 wird durch die Länge der Ausnehmungen 33 bzw. 34 bestimmt. Oberhalb der Ausnehmungen 33 bzw. unterhalb der Ausnehmung 34 ist jeweils der entsprechende Parallelogrammlenker 31 oder 32 angeordnet, der bei einer Scherbewegung verformt wird. Die Krafteinleitungsseite 23 erstreckt sich von einem Ende des Biegestabs 2 bis hin zu dem Verformungsbereich, bzw. zu dem nächstliegenden Ende des oberen Parallelogrammlenkers 31 und/oder des unteren Parallelogrammlenkers 32. Die Festlandseite 21 erstreckt sich von dem anderen Ende des Biegestabs 2 bis zu dem Verformungsbereich 22 bzw. zu dem der Festlandseite nächstliegenden Ende des oberen Parallelogrammlenkers 31 und/oder des unteren Parallelogrammlenkers 32. Das Ende der Parallelogrammlenker 31, 32 wird durch die Abmessungen der materialfreien ersten und zweiten Ausnehmungen 33 bzw. 34 bestimmt. In der in Fig. 2 dargestellten Ausführung weisen beide Ausnehmungen 33 und 34 auf der linken wie auch auf rechten Seite jeweils eine senkrecht verlaufende Kontur auf, die in gerader Linie übereinander liegen und miteinander in Deckung sind. Durch diese senkrecht verlaufenden Konturen der Ausnehmungen 33 und 34 wird die Erstreckung des Verformungsbereichs 22 in Längsrichtung des Biegestabs 2 definiert.

### Bezugszeichenliste

- 1: Wägezelle
- 2: Biegestab
- 21: Festlandseite
- 21a: Befestigungsöffnungen
- 22: Verformungsbereich
- 23: Krafteinleitungsseite
- 23a: Lasteinleitungsaufnahmen
- 24: Sensorapplikationsbereich

- 31: erster (oberer) Parallelogrammlenker
- 32: zweiter (unterer) Parallelogrammlenker
- 33: erste Ausnehmung (oben)
- 34: zweite Ausnehmung (unten)

- 4: Steg
- 4a: erste Außenseite
- 4b: zweite Außenseite
- 41: erster (oberer) Luftspalt
- 42: zweiter (unterer) Luftspalt
- 43: dritte Ausnehmung
- K: Krafteinleitungsrichtung
- M-M: Mittelebene

## Patentansprüche

1. Wägezelle zur Gewichtskraftmessung mit einem Biegestab (2), der an seinem einen Ende eine feststehende Festlandseite (21) und an seinem gegenüberliegenden Ende eine in Krafteinleitungsrichtung bewegliche Krafteinleitungsseite (23) aufweist, wobei die Krafteinleitungsseite mit der Festlandseite über einen Verformungsbereich (22) verbunden ist, der zwei parallel zueinander und in Krafteinleitungsrichtung voneinander beabstandet verlaufende Parallelogrammlenker (31, 32) aufweist, die parallel zu der quer zu der Krafteinleitungsrichtung verlaufenden Mittelebene des Biegestabs (2) angeordnet sind, und wobei in dem Verformungsbereich eine materialfreie erste Ausnehmung (33) und eine materialfreie zweite Ausnehmung (34) in Krafteinleitungsrichtung übereinander liegend angeordnet sind und die erste Ausnehmung (33) und die zweite Ausnehmung jeweils an einen Parallelogrammlenker (31, 32) unmittelbar anschließend ausgeführt sind,
dass der Biegestab (2) eine Überlastsicherung aufweist, die einen parallel zu der Mittelebene verlaufenden Steg (4) umfasst, der die erste Ausnehmung (33) von der zweiten Ausnehmung (34) trennt und dessen parallel zu der Mittelebene verlaufende Außenseiten (4a, 4b) geradlinig ausgeführt sind, und dass der Steg (4) entweder
a) mit seinem einem Ende fest mit der Festlandseite (21) verbunden ist und mit seinem anderen stirnseitigen Ende in einen an der Krafteinleitungsseite (23) angeordneten materialfreien Bereich frei eingreift, so dass in Neutralstellung zwischen den parallel zu der Mittelebene verlaufenden Außenseiten des Stegs (4) und der Krafteinleitungsseite jeweils ein oberer Luftspalt (41) und ein unterer Luftspalt (42) angeordnet sind, oder
b) mit seinem einem Ende fest mit der Krafteinleitungsseite (23) verbunden ist und mit seinem anderen stirnseitigen Ende in einen an der Festlandseite (21) angeordneten materialfreien Bereich frei eingreift, so dass in Neutralstellung zwischen den parallel zu der Mittelebene verlaufenden Außenseiten des Stegs (4) und der Fesfilandseite (21) jeweils ein oberer Luftspalt (41) und ein unterer Luftspalt (42) angeordnet sind,
und dass der obere Luftspalt (41) und der untere Luftspalt (42) in eine im Bereich des stirnseitigen Endes des Stegs (4) angeordnete dritte Ausnehmung (43) einmünden, die eine runde Kontur aufweist, **dadurch gekennzeichnet,**
**dass** die dritte Ausnehmung (43) eine elliptische oder kreisrunde Kontur aufweist und das stirnseite Ende des Stegs (4) einen Abschnitt dieses elliptischen oder kreisrunden Kontur ausbildet.

2. Wägezelle nach Anspruch 1,
**dadurch gekennzeichnet,**
**dass** sich die parallel zu der Mittelebene verlaufenden Außenseiten (4a, 4b) des Stegs (4) über den Verformungsbereich (22) hinaus erstrecken.

3. Wägezelle nach Anspruch 1 oder 2,
**dadurch gekennzeichnet,**
**dass** der Steg (4) eine Symmetrieebene aufweist, die zwischen der ersten und der zweiten Ausnehmung quer zu der Krafteinleitungsrichtung angeordnet ist, und vorzugsweise vorgesehen ist, dass die Symmetrieebene des Stegs (4) mit der Mittelebene des Biegestabs (2) zusammenfällt.

4. Wägezelle nach einem der vorhergehenden Ansprüche,
**dadurch gekennzeichnet,**
**dass** die erste Ausnehmung (33) und die zweite Ausnehmung (34) bezüglich der Mittelebene des Biegestabs (2) symmetrisch ausgebildet sind.

5. Wägezelle nach einem der vorhergehenden Ansprüche ,
**dadurch gekennzeichnet,**
**dass** die Erstreckung oder die lichte Weite der ersten Ausnehmung (33) und der zweiten Ausnehmung (34) in Krafteinleitungsrichtung größer ist als die Erstreckung oder die Dicke des Stegs (4) in Krafteinleitungsrichtung.

6. Wägezelle nach einem der vorhergehenden Ansprüche,
**dadurch gekennzeichnet,**
**dass** der Durchmesser der elliptischen oder kreisförmigen Kontur der dritten Ausnehmung (43) in
Krafteinleitungsrichtung mindestens so groß ist, vorzugsweise genau so groß ist, wie der Abstand zwischen der ersten Ausnehmung (33) und der zweiten Ausnehmung (34).

7. Wägezelle nach einem der vorhergehenden Ansprüche,
**dadurch gekennzeichnet,**
**dass** der Mittelpunkt der dritten Ausnehmung (43) in der Mittelebene des Biegestabs liegt und vorzugsweise vorgesehen ist, dass der obere Luftspalt (41) und/oder der untere Luftspalt (42) geradlinig und parallel zu der Mittelebene des Biegestabs (2) verläuft.

8. Wägezelle nach einem der vorhergehenden Ansprüche,
**dadurch gekennzeichnet,**
**dass** die Erstreckung des Stegs (4) in Längsrichtung des Biegestabs (2) größer ist, wie die Erstreckung der ersten Ausnehmung (33) und/oder der zweiten Ausnehmung (34) in Längsrichtung des Biegestabs (2).

9. Wägezelle nach einem der vorhergehenden Ansprüche,
**dadurch gekennzeichnet,**
**dass** die Breite und/oder die Länge des oberen Luftspalts (41) oder die Breite und/oder die Länge des unteren Luftspalts (42) bei einer Überlastung eine Biegebewegung oder Scherbewegung des Biegestabs (2) begrenzt.

10. Verfahren zur Herstellung einer Wägezelle nach einem der vorhergehenden Ansprüche,
**dadurch gekennzeichnet,**
**dass** die erste Ausnehmung (33) und/oder die zweite Ausnehmung (34) durch spanende Bearbeitung, insbesondere durch Fräsen oder Bohren, hergestellt wird bzw. werden.

11. Verfahren nach Anspruch 10,
**dadurch gekennzeichnet,**
**dass** die dritte Ausnehmung (43) durch spanende Bearbeitung, insbesondere durch Bohren oder Fräsen, hergestellt wird.

12. Verfahren nach Anspruch 10 oder 11,
**dadurch gekennzeichnet,**
**dass** der obere Luftspalt (41) und der untere Luftspalt (42) durch Erodieren, insbesondere Drahterodieren oder Funkenerodieren, hergestellt werden.

13. Verfahren nach einem der Ansprüche 10 bis 12,
**dadurch gekennzeichnet,**
**dass** der maximale Weg der beweglichen Krafteinleitungsseite (23) relativ zu der Festlandseite (21) durch die Breite des ersten Luftspalts (41) und/oder des zweiten Luftspaltes (42) eingestellt wird.

14. Verfahren nach einem der Ansprüche 10 bis 13,
**dadurch gekennzeichnet,**
**dass** der maximale Weg der beweglichen Krafteinleitungsseite (23) relativ zu der Festlandseite (21) durch den Abstand der dritten Ausnehmung (43) in Längsrichtung des Biegestabs (2) zu der ersten Ausnehmung (33) und/oder der zweiten Ausnehmung (34) eingestellt wird und/oder dass der maximale Weg der beweglichen Krafteinfeiturtgsseite (23) relativ zu der Festlandseite (21) durch die Länge des ersten Luftspalts (41) und/oder des zweiten Luftspalts (42) eingestellt wird.

## Claims

1. Load cell for weight measuring having a bending rod (2) that, on its one end, has a stationary ground side (21) and, on its opposite end, has a force application side (23) that can be moved in the force application direction, wherein the force application side is connected to the ground side via a deformation region (22) that has two parallelogram links (31, 32) running parallel to each other and spaced apart from each other in the force application direction, which are arranged in parallel to the central plane of the bending rod (2), said central plane running transversely to the force application direction, and wherein, in the deformation region, a material-free first recess (33) and a material-free second recess (34) are arranged lying one above the other in the force application direction, and the first recess (33) and the second recess are each designed directly adjoining a parallelogram link (31, 32), the bending rod (2) having an overload protection device that comprises a bar (4) running in parallel to the central plane, said bar (4) separating the first recess (33) from the second recess (34), and the outer sides (4a, 4b) thereof that run in parallel to the central plane are designed to be rectilinear, and the bar (4) is either
a) connected fixedly to the ground side (21) with its one end and freely engages in a material-free region arranged on the force application side (23) with its other front face end such that, in a neutral position, in each case an upper air gap (41) and a lower air gap (42) are arranged between the outer sides of the bar (4) that run in parallel to the central plane and the force application side, or
b) connected fixedly to the force application side (23) with its one end and freely engages in a material-free region arranged on the ground side (21) with its other front face end such that, in a neutral position, in each case an upper air gap (41) and a lower air gap (42) are arranged between the outer sides of the bar (4) that run in parallel to the central plane and the ground side (21),
and the upper air gap (41) and the lower air gap (42) open into a third recess (43) that is arranged in the region of the front face end of the bar (4) and has a round contour,
**characterised in that**
the third recess (43) has an elliptical or circular contour and the front face end of the bar (4) forms a section of this elliptical or circular contour.

2. Load cell according to claim 1,
**characterised in that**
the outer sides (4a, 4b) of the bar (4) that run in parallel to the central plane extend beyond the deformation region (22).

3. Load cell according to claim 1 or 2,
**characterised in that**
the bar (4) has a symmetry plane that is arranged between the first and the second recess transversely to the force application direction, and it is preferably provided that the symmetry plane of the bar (4) is coincident with the central plane of the bending rod (2).

4. Load cell according to one of the preceding claims,
**characterised in that**
the first recess (33) and the second recess (34) are formed symmetrically with respect to the central plane of the bending rod (2).

5. Load cell according to one of the preceding claims,
**characterised in that**
the extension or the clear width of the first recess (33) and the second recess (34) in the force application direction is greater than the extension or the thickness of the bar (4) in the force application direction.

6. Load cell according to one of the preceding claims,
**characterised in that**
the diameter of the elliptical or circular contour of the third recess (43) in the force application direction is at least as great as, preferably exactly as great as, the distance between the first recess (33) and the second recess (34).

7. Load cell according to one of the preceding claims,
**characterised in that**
the central point of the third recess (43) lies in the central plane of the bending rod, and it is preferably provided that the upper air gap (41) and/or the lower air gap (42) run in a straight line and in parallel to the central plane of the bending rod (2).

8. Load cell according to one of the preceding claims,
**characterised in that**
the extension of the bar (4) in the longitudinal direction of the bending rod (2) is greater than the extension of the first recess (33) and/or the second recess (34) in the longitudinal direction of the bending rod (2).

9. Load cell according to one of the preceding claims,
**characterised in that,**
in the event of an overload, the width and/or the length of the upper air gap (41) or the width and/or the length of the lower air gap (42) limit a bending movement or shearing movement of the bending rod (2).

10. Method for producing a load cell according to one of the preceding claims,
**characterised in that**
the first recess (33) and/or the second recess (34) are or is produced by means of machining, in particular by means of milling or drilling.

11. Method according to claim 10,
**characterised in that**
the third recess (43) is produced by means of machining, in particular by means of drilling or milling.

12. Method according to claim 10 or 11,
**characterised in that**
the upper air gap (41) and the lower air gap (42) are produced by means of erosion, in particular wire erosion or spark erosion.

13. Method according to one of claims 10 to 12,
**characterised in that**
the maximum path of the moveable force application side (23) relative to the ground side (21) is set by the width of the first air gap (41) and/or the second air gap (42).

14. Method according to one of claims 10 to 13,
**characterised in that**
the maximum path of the moveable force application side (23) relative to the ground side (21) is set by the distance of the third recess (43) in the longitudinal direction of the bending rod (2) from the first recess (33) and/or the second recess (34), and/or the maximum path of the moveable force application side (23) relative to the ground side (21) is set by the length of the first air gap (41) and/or the second air gap (42).

## Revendications

1. Cellule de pesage pour la mesure du poids avec une barre de flexion (2), qui comprend, au niveau d'une de ses extrémités, un côté terre ferme (21) fixe et, au niveau de son extrémité opposée, un côté d'application de force (23) mobile dans le sens d'application de la force, le côté d'application de force étant relié avec le côté terre ferme par l'intermédiaire d'une zone de déformation (22), qui comprend deux bras oscillants de parallélogramme (31, 32), qui sont disposés parallèlement au plan central de la barre de flexion (2), le plan central s'étendant transversalement par rapport au sens d'application de la force et, dans la zone de déformation, se trouvent un premier évidement (33) sans matériau et un deuxième évidement (34) sans matériau, superposés dans le sens d'application de la force, et le premier évidement (33) et le deuxième évidement étant réalisés chacun dans le prolongement direct d'un bras oscillant de parallélogramme (31, 32), en ce que la barre de flexion (2) comprend une protection anti-surcharge qui comprend une nervure (4), qui s'étend parallèlement au plan central et sépare le premier évidement (33) du deuxième évidement (34) et dont les côtés extérieurs (4a, 4b) s'étendant parallèlement au plan central sont réalisés en ligne droite, et en ce que la nervure (4) :
a) est reliée de manière solidaire avec le côté terre ferme (21) par l'une de ses extrémités et, par son autre extrémité frontale, s'emboîte librement dans une zone sans matériau disposée sur le côté d'application de force (23), de façon à ce que, dans une position neutre, se trouvent respectivement un entrefer supérieur (41) et un entrefer inférieur (42) entre les côtés extérieurs, s'étendant parallèlement au plan central, de la nervure (4) et le côté d'application de force, ou
b) est reliée de manière solidaire avec le côté d'application de force (23) par l'une de ses extrémités et, par son autre extrémité frontale, s'emboîte librement dans une zone sans matériau disposée sur le côté terre ferme (21), de façon à ce que, dans une position neutre, se trouvent respectivement un entrefer supérieur (41) et un entrefer inférieur (42) entre les côtés extérieurs, s'étendant parallèlement au plan central, de la nervure (4) et le côté terre ferme (21),
et en ce que l'entrefer supérieur (41) et l'entrefer inférieur (42) débouchent dans un troisième évidement (43), qui est disposé au niveau de l'extrémité frontale de la nervure (4) et présente un contour rond,
**caractérisée en ce que**
le troisième évidement (43) présente un contour elliptique ou circulaire et l'extrémité frontale de la nervure (4) constitue une portion de ce contour elliptique ou circulaire.

2. Cellule de pesage selon la revendication 1,
**caractérisée en ce que**
les côtés extérieurs (4a, 4b), s'étendant parallèlement au plan central, de la nervure (4) s'étendent au-delà de la zone de déformation (22).

3. Cellule de pesage selon la revendication 1 ou 2,
**caractérisée en ce que**
la nervure (4) présente un plan de symétrie, qui est disposé transversalement par rapport au sens d'application de force entre le premier et le deuxième évidement, et il est prévu, de préférence, que le plan de symétrie de la nervure (4) coïncide avec le plan central de la barre de flexion (2).

4. Cellule de pesage selon l'une des revendications précédentes,
**caractérisée en ce que**
le premier évidement (33) et le deuxième évidement (34) sont réalisés de manière symétrique par rapport au plan central de la barre de flexion (2).

5. Cellule de pesage selon l'une des revendications précédentes,
**caractérisée en ce que**
l'extension ou le diamètre intérieur du premier évidement (33) et du deuxième évidement (34) est supérieur, dans le sens d'application de la force, à l'extension ou à l'épaisseur de la nervure (4) dans le sens d'application de la force.

6. Cellule de pesage selon l'une des revendications précédentes,
**caractérisée en ce que**
le diamètre du contour elliptique ou circulaire du troisième évidement (43) dans le sens de l'application de la force est au moins aussi grand, de préférence exactement aussi grand que la distance entre le premier évidement (33) et le deuxième évidement (34).

7. Cellule de pesage selon l'une des revendications précédentes,
**caractérisée en ce que**
le centre du troisième évidement (43) se trouve dans le plan central de la barre de flexion et il est prévu, de préférence, que l'entrefer supérieur (41) et/ou l'entrefer inférieur (42) s'étend en ligne droite et parallèlement au plan central de la barre de flexion (2).

8. Cellule de pesage selon l'une des revendications précédentes,
**caractérisée en ce que**
l'extension de la nervure (4) dans la direction longitudinale de la barre de flexion (2) est supérieure à l'extension du premier évidement (33) et/ou du deuxième évidement (34) dans la direction longitudinale de la barre de flexion (2).

9. Cellule de pesage selon l'une des revendications précédentes,
**caractérisée en ce que**
la largeur et/ou la longueur de l'entrefer supérieur (41) ou la largeur et/ou la longueur de l'entrefer inférieur (42) limite, lors d'une surcharge, un mouvement de flexion ou un mouvement de cisaillement de la barre de flexion (2).

10. Procédé de fabrication d'une cellule de pesage selon l'une des revendications précédentes,
**caractérisé en ce que**
le premier évidement (33) et/ou le deuxième évidement (34) est/sont fabriqué(s) par usinage par enlèvement de copeaux, plus particulièrement par fraisage ou alésage.

11. Procédé selon la revendication 10,
**caractérisé en ce que**
le troisième évidement (43) est fabriqué par usinage par enlèvement de copeaux, plus particulièrement par alésage ou par fraisage.

12. Procédé selon la revendication 10 ou 11,
**caractérisé en ce que**
l'entrefer supérieur (41) et l'entrefer inférieur (42) sont fabriqués par érosion, plus particulièrement par érosion par fil ou par électro-érosion.

13. Procédé selon l'une des revendications 10 à 12,
**caractérisé en ce que**
le trajet maximal du côté d'application de force (23) mobile par rapport au côté terre ferme (21) est réglé par la largeur du premier entrefer (41) et/ou du deuxième entrefer (42).

14. Procédé selon l'une des revendications 10 à 13,
**caractérisé en ce que**
le trajet maximal du côté d'application de force (23) mobile par rapport au côté terre ferme (21) est réglé par la distance entre le troisième évidement (43) dans la direction longitudinale de la barre de flexion (2) et le premier évidement (33) et/ou le deuxième évidement (34), et/ou **en ce que** le trajet maximal entre le côté d'application de force (23) mobile par rapport au côté terre ferme (21) est réglé par la longueur du premier entrefer (41) et/ou du deuxième entrefer (42).
